# EUROPEAN PATENT APPLICATION

(11) **EP 1 511 317 A2**
(43) Date of publication of application: **02.03.2005**
(21) Application number: 04020574.2
(22) Date of filing: 30.08.2004
(51) Int. Cl.: H04N 7/24

(54) **Video signal transmission system and method**

(30) Priority: 01.09.2003 JP 2003308607
(71) Applicant: Pioneer Corporation, Meguro-ku, Tokyo (JP)
(72) Inventor: Soga, Yusuke, Ohta-ku, Tokyo (JP); Nohara, Manabu, Ohta-ku, Tokyo (JP); Iwai, Tomoaki, Ohta-ku, Tokyo (JP); Ohkubo, Hideyuki, Ohta-ku, Tokyo (JP)
(74) Representative: Manitz, Finsterwald & Partner GbR

(57) **Abstract**

A video signal transmission system, wherein on the transmission side, digital video signals representing three primary colors is time-division-multiplexed for conversion into a video data train, a packet including the video data train and rate information for each period based on the period of the transmission clock signal, and the packet is sequentially transmitted in synchronism with a transmission clock signal as a transmission signal, while on the reception side, a reception clock signal is generated in synchronism with each bit of the transmission signal received through a cable, the rate information is detected from the packet in the transmission signal, a reproduction reference clock signal is generated, the video data train in the transmission signal is separated into data of each of three primary colors, and the separated data of each of three primary colors is output in synchronism with the reproduction reference clock signal as the digital video signal.

## Description

### BACKGROUND OF THE INVENTION

### 1. Field of the Invention

The present invention relates to a video signal transmission system for transmitting a digital video signal between a transmitter and a receiver through a cable.

### 2. Description of the Related Background Art

For transmitting digital video signals representing three primary colors through a cable, a digital transmission technique for images, called DVI (Digital Visual Interface), is generally used (for example, Japanese Patent Application Kokai No. 2002-366340). In the digital transmission technique, four communication lines are required between a transmission side and a reception side. Three communication lines are used for digital video signals representing three primary colors, and the remaining one is for a pixel clock synchronized to a transmission rate of the video signals.

When a metal wire is used as a communication line, a transmission distance is limited to approximately 10 meters, and an optical fiber cable must be used for transmission over a distance larger than that.

However, when four optical fiber lines are used for transmission of digital video signals, there is a problem of a high cost. Also, even when metal lines are used, the number of lines is desirably smaller.

### SUMMARY OF THE INVENTION

It is an object of the present invention to provide a video signal transmission system and method which are capable of efficiently transmitting digital video signals representing three primary colors through a single cable line, and a transmitter and a receiver for use in the system.

A video signal transmission system according to the present invention is a transmission system for transmitting digital video signals representing three primary colors, comprising: transmission clock generating means for generating a transmission clock signal; converting means for time-division-multiplexing the digital video signals in units of pixels in order to convert into a video data train; rate information generating means for generating rate information based on the frequency of a reference clock signal of the digital video signals and the frequency of the transmission clock signal; packet generating means for sequentially generating a packet for each predetermined period based on the period of the transmission clock signal, the packet including the video data train generated by the converting means within the predetermined period and the rate information; transmitting means for sequentially transmitting the packet in synchronism with the transmission clock signal as a transmission signal; a cable for conveying the transmission signal therethrough; receiving means for receiving the transmission signal conveyed through the cable; reception clock generating means for generating a reception clock signal in synchronism with each bit of the transmission signal received by the receiving means; rate information detecting means for detecting the rate information from the packet in the transmission signal received by the receiving means; clock signal reproducing means for generating a reproduction reference clock signal corresponding to the reference clock signal on the basis of the rate information detected by the rate information detecting means and the reception clock signal; separating means for separating the video data train in the transmission signal received by the receiving means into data of each of three primary colors; and outputting means for outputting the data of each of the three primary colors separated by the separating means in synchronism with the reproduction reference clock signal as the digital video signal.

A transmitter according to the present invention is a transmitter for transmitting digital video signals representing three primary colors, comprising: transmission clock generating means for generating a transmission clock signal; converting means for time-division-multiplexing the digital video signals in units of pixels in order to convert into a video data train; rate information generating means for generating rate information based on the frequency of a reference clock signal of the digital video signals and the frequency of the transmission clock signal; packet generating means for sequentially generating a packet for each predetermined period based on the period of the transmission clock signal, the packet including the video data train generated by the converting means within the predetermined period and the rate information; and transmitting means for sequentially transmitting the packet in synchronism with the transmission clock signal as a transmission signal.

A receiver according to the present invention is a receiver for receiving a transmission signal to reproduce digital video signals representing three primary colors, comprising: receiving means for receiving the transmission signal; reception clock generating means for generating a reception clock signal in synchronism with each bit of the transmission signal received by the receiving means; rate information detecting means for detecting rate information from the packet in the transmission signal received by the receiving means; clock signal reproducing means for generating a reproduction reference clock signal on the basis of the rate information detected by the rate information detecting means and the reception clock signal; separating means for separating the video data train in the transmission signal received by the receiving means into data of each of three primary colors; and outputting means for outputting the data of each of the three primary colors separated by the separating means in synchronism with the reproduction reference clock signal as the digital video signal.

A video signal transmission method according to the present invention is a method for transmitting digital video signals representing three primary colors, comprising: on a transmission side: generating a transmission clock signal; time-division-multiplexing the digital video signals in units of pixels in order to convert into a video data train; generating rate information based on the frequency of a reference clock signal of the digital video signal and the frequency of the transmission clock signal; generating a packet for each predetermined period based on the period of the transmission clock signal, the packet including the video data train generated within the predetermined period, and the rate information; and sequentially transmitting the packet in synchronism with the transmission clock signal onto a cable as a transmission signal; and on a reception side: receiving the transmission signal conveyed through the cable; generating a reception clock signal in synchronism with each bit of the received transmission signal; detecting the rate information from the packet in the received transmission signal; generating a reproduction reference clock signal corresponding to the reference clock signal on the basis of the detected rate information and the reception clock signal; separating the video data train in the received transmission signal into data of each of three primary colors; and outputting the data of each of the separated three primary colors in synchronism with the reproduction reference clock signal as the digital video signal.

### BRIEF DESCRIPTION OF THE DRAWINGS

Fig. 1 is a block diagram generally showing an RGB video signal transmission system according to the present invention;
Fig. 2 is a block diagram showing the configuration of a transmitter in the system of Fig. 1;
Fig. 3 is a block diagram showing the configuration of a receiver in the system of Fig. 1;
Fig. 4 is a diagram showing signal waveforms and data contents in each section of the transmitter when rate information N is high;
Fig. 5 is a diagram showing signal waveforms and data contents in each section of the receiver when the rate information N is high;
Fig. 6 is a diagram showing signal waveforms and data contents in each section of the transmitter when the rate information N is low; and
Fig. 7 is a diagram showing signal waveforms and data contents in each section of the receiver when the rate information N is low.

### DETAILED DESCRIPTION OF THE INVENTION

In the following, embodiments of the present invention will be described in detail with reference to the drawings.

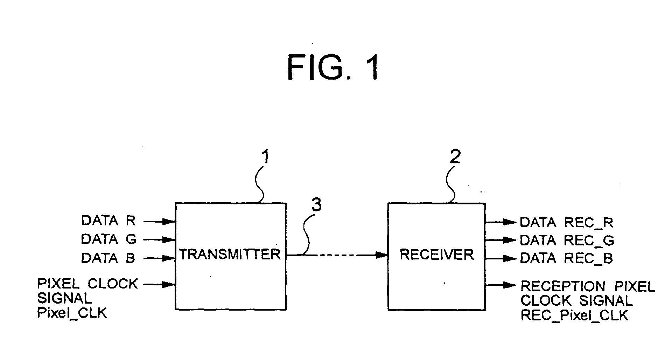

Fig. 1 shows a video signal transmission system according to the present invention. This video signal transmission system comprises a transmitter 1 and a receiver 2, and the transmitter 1 and receiver 2 are connected through an optical fiber cable 3.

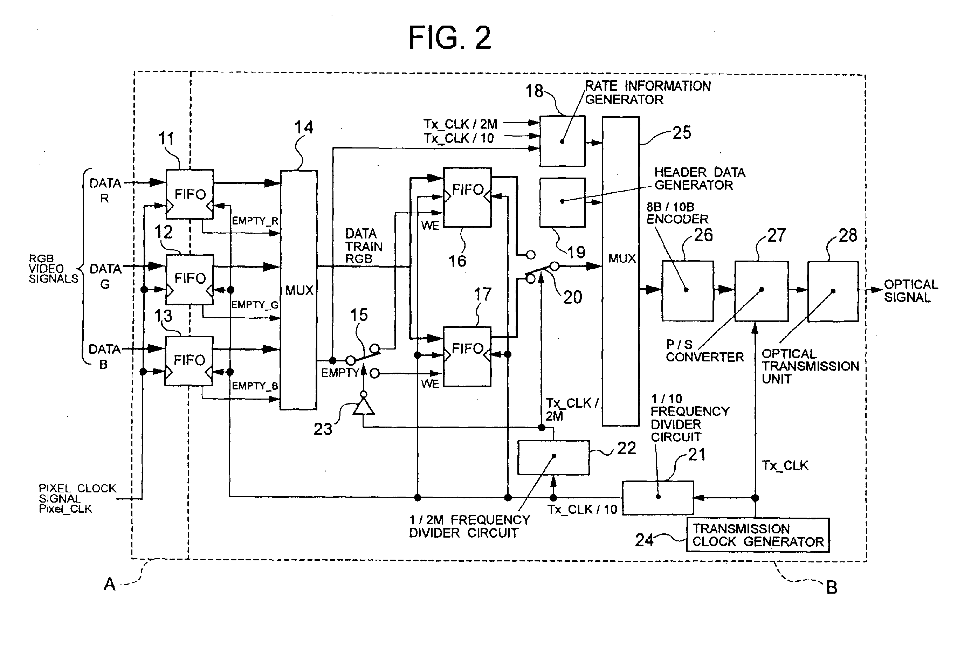

Fig. 2 shows the specific configuration of the transmitter 1. The transmitter 1 comprises FIFOs 11 - 13, a MUX (multiplexer) 14, a change-over switch 15, FIFOS 16, 17, a rate information generator 18, a header data generator 19, a change-over switch 20, frequency divider circuits 21, 22, an inverter 23, a transmission clock generator 24, a MUX 25, an 8B/10B encoder 26, a P/S converter 27, and an optical fiber transmission unit 28.

Digital RGB video signals (data R, data G, data B) and a pixel clock signal Pixel_CLK are input to the transmitter 1. In this transmitter, the transmission clock generator 24 generates a transmission clock signal Tx_CLK. A transmission rate of data transmitted through the optical fiber cable 3 is determined by the frequency of the transmission clock signal Tx_CLK. The transmission clock signal Tx_CLK is divided by ten by the frequency divider circuit 21 to generate a clock signal Tx_CLK/10 (transmission side system clock signal). Also, the clock signal Tx_CLK/10 is again divided by the frequency divider circuit 22 by 2M to generate a clock signal Tx_CLK/2M. M is a packet size. The transmission clock signal Tx_CLK is supplied to a serial output unit 27. The clock signal Tx_CLK/10 is supplied to the FIFOs 16, 17 as a timing signal for writing and reading, as well as is supplied to the FIFOs 11 - 13 as a timing signal for reading. The clock signal Tx_CLK/2M is supplied to the change-over switch 15 through the inverter 23 as a switching control signal, and is supplied as it is to the change-over switch 20 as a switching control signal.

The input RGB video signals are signals representing the primary colors, red, green, blue (data R, data G, data B), respectively, each of which is a parallel signal comprised of eight bits (one byte) per pixel. The pixel clock signal Pixel_CLK is a reference clock signal indicative of a timing per pixel of the RGB video signals. Each of the FIFOs 11 - 13 receives the RGB video signal (video signal of a corresponding color) in synchronism with the pixel clock signal, holds it as data, and outputs the held data in synchronism with the clock signal Tx_CLK/10. The data held by the FIFO 11 is 1-byte data R; the data held by the FIFO 12 is 1-byte data G; and the FIFO 13 holds 1-byte data B. Each of the FIFOs 11 - 13 outputs an empty flag EMPTY_R, EMPTY_R, EMPTY_B for a length of three periods of the clock signal Tx_CLK/10 from the start of their data outputs. The MUX 14 is connected to the data outputs and flag outputs of the FIFOs 11 - 13.

The MUX 14, which has three data inputs, three flag inputs, one data output, and one flag output, simultaneously accepts the data R, data G, data B read from the FIFOs 11 - 13, respectively, and the output empty flags EMPTY_R, EMPTY_G, EMPTY_B, respectively, and outputs the data R, data G, and data B in that order. The output data train is a 3-byte three-color data train RGB. The MUX 14 outputs the empty flag EMPTY set at one during a period in which the three-color data train RGB is being output. The FIFOs 16, 17 are connected to the data output of the MUX 14, and the change-over switch 15 and rate information generator 18 are connected to the flag output of the MUX 14.

The change-over switch 15 supplies one of the FIFOs 16, 17 with the empty flag EMPTY in response to an inverted signal of Tx_CLK/2M. The empty flag EMPTY is supplied to a terminal WE of each of the FIFOs 16, 17. Each of the FIFOs 16, 17 accepts and holds the three-color data train RGB supplied from the MUX 14 in response to the clock signal Tx_CLK/10 when the empty flag EMPTY=1, and sequentially reads out the held data, for example, the three-color data train RGB comprised of 13 bytes in response to the clock signal Tx_CLK/10. Each of the FIFOs 16, 17 has a read output connected to the change-over switch 20.

The change-over switch 20 selectively supplies the MUX 25 with one of the read three-color data trains RGB by the FIFOs 16, 17.

The rate information generator 18 generates rate information in accordance with the empty flag EMPTY. The rate information is comprised of eight bits, and indicates the number of data pieces (number of bytes) of the three-color data train RGB in one packet. In this embodiment, when the three-color data train RGB held in the FIFOs 16, 17 is in units of 13 data pieces, the rate information indicates 13. The header data generator 19 generates an 8-bit header data for packet output from the transmitter. The rate information generator 18 and header data generator 19 have their respective generated outputs connected to the MUX 25, and the rate information and header data are configured to be individually supplied to the MUX 25.

The MUX 25 outputs the three-color data train RGB comprised of 13 data pieces from the change-over switch 20 and null data in this order as transmission packet data. The 8B/10B encoder 26 is provided for assigning 8-bit data to a 10-bit code in which 0 and 1 are mixed as much as possible, i.e., there is few direct-current component, thereby maintaining a DC balance on the serial data, facilitating the generation of a reception clock in the receiver, and improving the error rate. This 8B/10B encoder 26, which is connected to the output of the MUX 25, encodes transmission data output from the MUX 25 for transformation into a transmission packet data which is comprised of header data, and data pieces including the rate information, each of which is comprised of a 10-bit data train.

The P/S converter 27 converts the transmission packet data into a serial signal in synchronism with the transmission clock signal Tx_CLK, and outputs the serial signal to the optical fiber transmission unit 28. The optical fiber transmission unit 28, which is connected to the optical fiber cable 3, converts the transmission packet data output from the P/S converter 27 to an optical signal (transmission signal), and outputs the optical signal onto the optical fiber cable 3.

In Fig. 2, a portion indicated by letter A operates based on the pixel clock signal Pixel_CLK, while a portion indicated by letter B operates based on the transmission clock signal Tx_CLK.

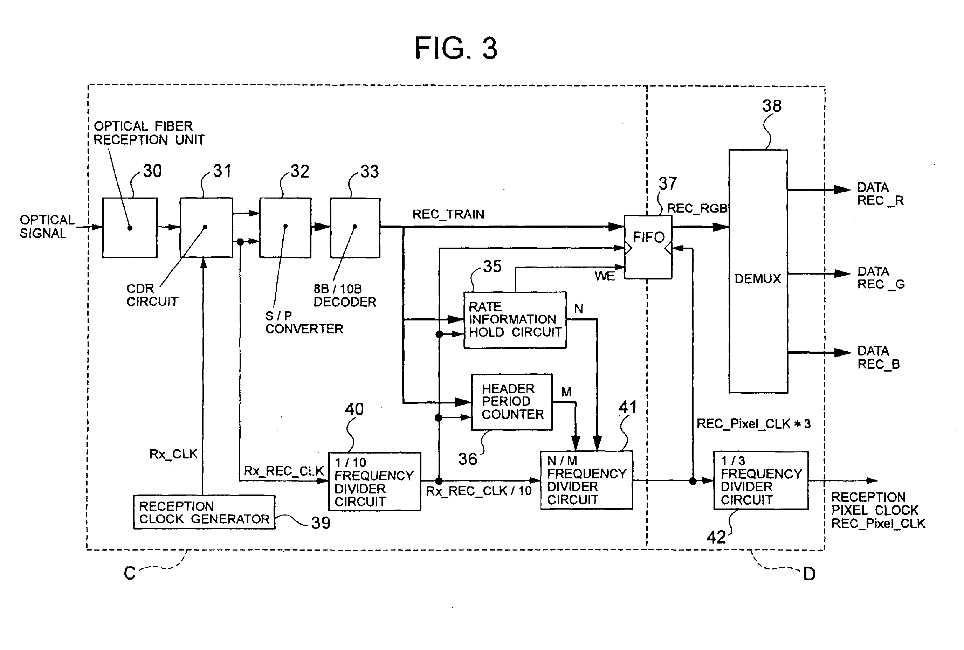

Fig. 3 illustrates the specific configuration of the receiver 2. The receiver 2 comprises an optical fiber reception unit 30, a CDR (Clock Data Recovery) circuit 31, an S/P (serial/parallel) converter 32, an 8B/10B decoder 33, a rate information hold circuit 35, a header period counter 36, a FIFO 37, a DEMUX (demultiplexer) 38, a reception clock generator 39, and frequency divider circuits 40 - 42.

The reception clock generator 39 generates a reception clock signal Rx_CLK. The frequency of the reception clock signal Rx_CLK is equal to the frequency of the transmission clock signal Tx_CLK.

The optical fiber reception unit 30, which is connected to the optical cable 3, receives an optical signal supplied through the optical fiber cable 3, converts the received optical signal to a digital signal (received data), and outputs it to the CDR circuit 31.

The CDR circuit 31 supplies the received packet data output from the optical fiber reception unit 30 as it is to the S/P (serial/parallel) converter 32, and generates a reception clock signal Rx_REC_CLK synchronized in phase to the received packet data output from the optical fiber reception unit 31 in response to the reception clock signal Rx_CLK output from the reception clock generator 39. This reception clock signal Rx_REC_CLK is used as a reference clock signal which governs the operation within the receiver 2. Three frequency divider circuits 40 - 42 are connected in series to a clock output of the CDR circuit 31.

The reception clock signal Rx_REC_CLK is divided by ten by the frequency divider circuit 40 to generate a clock signal Rx_REC_CLK/10. The clock signal Rx_REC_CLK/10 is again divided by N/M by the frequency divider circuit 41 to generate a reception pixel lock signal REC_Pixel_CLK*3. M represents a packet length, and is supplied from the header period counter 36 to the frequency divider circuit 41. N represents a rate information, and is supplied from the rate information hold circuit 35 to the frequency divider circuit 41. The reception pixel clock signal REC_Pixel_CLK*3 is divided by three by the frequency divider circuit 42 to generate a reception pixel clock signal REC_Pixel_CLK (reproduction reference clock signal). The clock signal Rx_REC_CLK/10 is supplied to the FIFO 37 as a timing signal for writing, as well as is supplied to the rate information hold circuit 35 and header period counter 36. The reception pixel clock signal REC_Pixel_CLK*3 is supplied to the FIFO 37 as a timing signal for reading.

The S/P (serial/parallel) converter 32 converts the received packet data (serial data) supplied from the CDR circuit 31 to 10-bit parallel data. The 8B/10B decoder 33, which is connected to the output of the S/P (serial/parallel) converter 32, decodes 10-bit parallel data into 8-bit parallel data, and supplies a data train REC_TRAIN of parallel data to the rate information hold circuit 35, header period counter 36, and FIFO 37.

The header period counter 36 counts the clock signals Rx_REC_CLK/10 with reference to the header data in the data train REC_TRAIN to calculate the packet length M. The packet length M is a predetermined period, and has been previously determined. The rate information hold circuit 35 extracts and holds the rate information N in the data train REC-TRAIN, and also generates a write enable signal of a time width in accordance with the rate information N.

The FIFO 37 holds the data train REC_RGB in the data train REC_TRAIN in synchronism with the clock signal Rx_REC_CLK/10 upon generation of the write enable signal, and reads out the held data in synchronism with the received pixel clock signal REC_Pixel_CLK*3. The DEMUX 38 is connected to a read output of the FIFO 37. The DEMUX 38 individually outputs data REC_R, REC_G, REC_B from the data train REC_RGB read from the FIFO 37 in synchronism with the reception pixel clock signal REC_Pixel_CLK.

In Fig. 3, a portion indicated by letter C operates based on the reception clock signal Rx_CLK, while a portion indicated by letter D operates based on the reception pixel clock signal REC_Pixel_CLK.

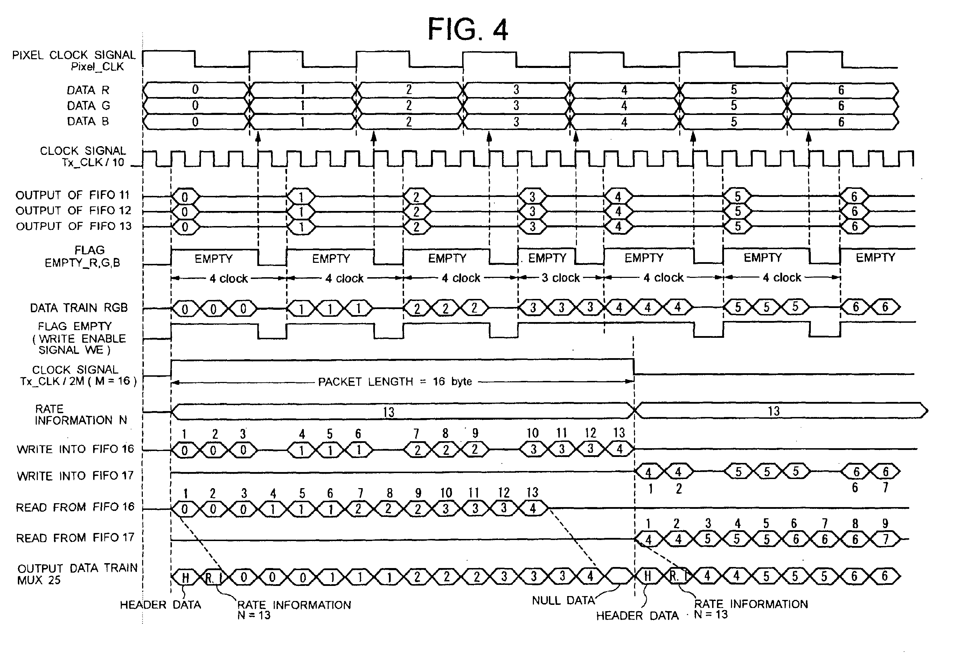

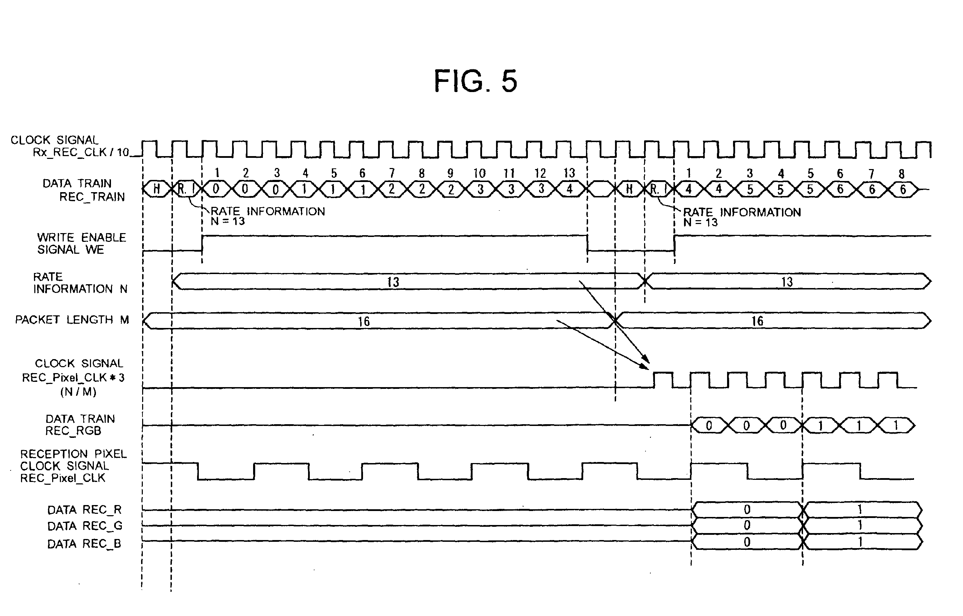

Next, the operation of the RGB video signal transmission system in the foregoing configuration will be described with reference to Figs. 4 and 5. Fig. 4 shows signal waveforms and data contents in each section of the transmitter 1 when the pixel clock signal Pixel_CLK is high in frequency, i.e., when the rate information N is high, and Fig. 5 shows signal wavforms and data contents in each section of the receiver 2 when the rate information N is high.

In the receiver 1, the digital RGB video signals (data R, G, B) and pixel clock signal Pixel_CLK are input. As shown in Fig. 4, the RGB video signal is in synchronism with the pixel clock signal Pixel_CLK. Each of the data R, G, B of the RGB video signal is parallel data of eight bits (one byte) per pixel. The data R is held in the FIFO 11; the data G is held in the FIFO 12; and the data B is held in the FIFO 13. The data are held in the FIFOs 11 - 13 on a pixel-by-pixel basis. The data R, G, B are shown such as pixel numbers 0, 1, ... in Fig. 4 for facilitating the understanding. The FIFOs 11 - 13, after holding one pixel of data R, G, B, reset the empty flags EMPTY_R, EMPTY_G, EMPTY_B in response to a rising edge of the clock signal Tx_CLK/10. Further, in response to the next rising edge of the clock signal Tx_CLK/10, the FIFOs 11 - 13 simultaneously read out one pixel of data R, G, B held therein and output them to the MUX 14. Simultaneously with the start of reading, the empty flags EMPTY_R, EMPTY_G, EMPTY_B are set to one. The MUX 14 first outputs the data R of the supplied one pixel of data R, G, B in synchronism with the clock signal Tx_CLK/10, and sequentially outputs the data G and data B subsequent thereto. In other words, the MUX 14 outputs the data R, G, B in this order over three periods of the clock signal Tx_CLK/10. This output data is a three-color data train RGB. Also, the MUX 14 outputs an empty flag EMPTY equal to the empty flags EMPTY_R, EMPTY_G, EMPTY_B. Thus, as can be understood from Fig. 4, three-color data train RGB is output for one pixel from the MUX 14 during a period in which the empty flag EMPTY is set to one.

The clock signal Tx_CLK/2M generated from the frequency divider circuit 22 is inverted by the inverter 23, and supplied to the change-over switch 15. In this embodiment, M is 16, and the clock signal Tx_CLK/10 is divided by 32 to generate a clock signal Tx_CLK/2M. The change-over switch 15 supplies the empty flag EMPTY to the FIFO 16 when the output signal of the inverter 23 corresponds to zero, and supplies the empty flag EMPTY to the FIFO 17 when the output signal of the inverter 23 corresponds to one. The FIFO 16 accepts and holds the three-color data train RGB output from the MUX 14 when the empty flag EMPTY is set to one. For example, in Fig. 4, 13 data pieces (1 - 13), i.e., red data, green data, blue data having pixel numbers 0, 1, 2, 3 and red data having pixel number 4 of the three-color data train RGB are held in the FIFO 16. As the output signal of the inverter 23 inverts from zero to one, the FIFO 17 accepts and holds the three-color data train RGB output from the MUX 14 when the empty flag EMPTY is set to one. For example, in Fig. 4, 13 data pieces after green data having a pixel number 4 of the three-color data train RGB are held in the FIFO 17.

The change-over switch 20 performs a switching operation opposite to the change-over switch 15 in response to the clock signal Tx_CLK/2M, so that the change-over switch 20 selects the FIFO 17 when the change-over switch 15 selects the FIFO 16, and the change-over switch 20 selects the FIFO 16 when the change-over switch 15 selects the FIFO 17.

Thus, after the three-color data train RGB has been held in the FIFO 16, as the change-over switch 20 selects the FIFO 16 by an inversion of the clock signal Tx_CLK/2M from one to zero, the three-color data train RGB held in the FIFO 16 is read from the FIFO 16 in synchronism with the clock signal Tx_CLK/10, and supplied to the MUX 25 through the change-over switch 20. After the three-color data train RGB has been held in the FIFO 17, as the change-over switch 20 selects the FIFO 17 by an inversion of the clock signal Tx_CLK/2M from zero to one, the three-color data train RGB held in the FIFO 17 is read from the FIFO 17 in synchronism with the clock signal Tx_CLK/10, and supplied to the MUX 25 through the change-over switch 20.

A data read from the FIFO 16 is actually performed during a period in which the clock signal Tx_CLK/2M indicates zero, and a data read from the FIFO 17 is actually performed during a period in which the clock signal Tx_CLK/2M indicates one. In Fig. 4, however, each read state is shown in a data write period for convenience of display.

The rate information generator 18 counts the number of pulses of the clock signal Tx_CLK/10, which is generated when the empty flag EMPTY is set to one in each interval between edges of the clock signal Tx_CLK/2M, to produce 8-bit rate information R.I=N. The header data generator 19 generates 8-bit header data H. The header data H and rate information R.I are supplied to the MUX 25. As shown in Fig. 4, the MUX 25 generates transmission packet data comprised of the header data H, rate information R.I, three-color data train RGB, and null data in synchronism with the clock signal Tx_CLK/10, and outputs in this order to the 8B/10B encoder 26. The number of the null data is determined in accordance with the rate information N and packet length M. Specifically, all the null data indicate zero, and are inserted for filling the remaining portion of the three-color data train RGB within the transmission packet data.

The 8B/10B encoder 26 encodes the data of the transmission packet to generate transmission packet data comprised of a 10-bit parallel data train which is supplied to the P/S converter circuit 27. The transmission packet data comprised of a parallel data train is converted to a serial data train by the P/S converter circuit 27 in synchronism with the transmission clock signal Tx_CLK. The transmission packet data of the serial data train is transmitted from the optical fiber transmission unit 28 to the optical fiber reception unit 30 through the optical fiber cable 3. The transmission rate corresponds to the frequency of the transmission clock signal Tx_CLK.

In the receiver 2, the optical fiber reception unit 31 receives an optical signal supplied from the transmitter 1 through the optical fiber cable 3, and outputs it as received packet data. The received data is supplied to the CDR circuit 31. In the CDR circuit 31, the received packet data is supplied as it is to the S/P converter 32, and a reception clock signal Rx_REC_CLK is generated in phase synchronism with the received data. The reception clock signal Rx_REC_CLK is divided by ten by the frequency divider circuit 40 to generate a clock signal Rx_REC_CLK/10. The clock signal Rx_REC_CLK/10 corresponds in frequency to the clock signal Tx_CLK/10 of the transmitter 1.

The serial received packet data is converted to a data train of parallel data by the S/P converter 32. Also, since the data train of the parallel data is a data train of 10-bit data, it is converted to a data train of 8-bit data by the 8B/10B decoder 33. The converted data train output from the 8B/10B decoder 33 is comprised of header data H, rate information R.I, three-color data train RGB, and null data, as shown in Fig. 5, and is in synchronism with the clock signal Rx_REC_CLK/10.

The output data train of the 8B/10B decoder 33 is supplied to the rate information hold circuit 35, header period counter 36, and FIFO 37. The header period counter 36 counts the clock signal Rc_REC_CLK/10 with reference to the header data in a data train REC_TRAIN to calculate the packet length M. The rate information hold circuit 35 extracts the rate information N in the data train REC_TRAIN. As shown in Fig. 5, a write enable signal WE having a time width in accordance with the rate information N is generated from the header period counter 36. The write enable signal WE is supplied to the FIFO 37, and the data train REC_TRAIN is held in the FIFO 37 in synchronism with the clock signal Rx_REC_CLK/10 when the write enable signal WE is being supplied. As shown in Fig. 5, since the write enable signal WE corresponds to the portion of the three-color data train RGB in the data train REC_TRAIN, the three-color train RGB alone is held in the FIFO 37 as a result.

The packet length M calculated by the header period counter 36, and the rate information N extracted by the rate information hold circuit 35 are supplied to the frequency divider circuit 41 as the next data train REC_TRAIN is supplied from the decoder 33. In the frequency divider circuit 31, the clock signal Rx_REC_CLK/10 is divided by N/M to generate a clock REC_Pixel_CLK*3. The clock signal REC_Pixel_CLK*3 is supplied to the FIFO 37 and is also supplied to the frequency divider circuit 42. In the frequency divider circuit 42, the clock signal REC_Pixel_CLK*3 changes to a reception pixel clock signal REC_Pixel_CLK as shown in Fig. 5.

The FIFO 37 outputs in order the three-color data train RGB held therein in synchronism with the clock signal REC_Pixel_CLK*3. The DEMUX 38 separately outputs data REC_R, REC_G, REC_B in synchronism with the reception pixel clock signal REC_Pixel_CLK from the three-color data train RGB output from the FIFO 37.

These data REC_R, REC_G, REC_B and reception pixel clock signal REC_Pixel_CLK are equal to the digital RGB video signal and pixel clock signal input to the transmitter 1.

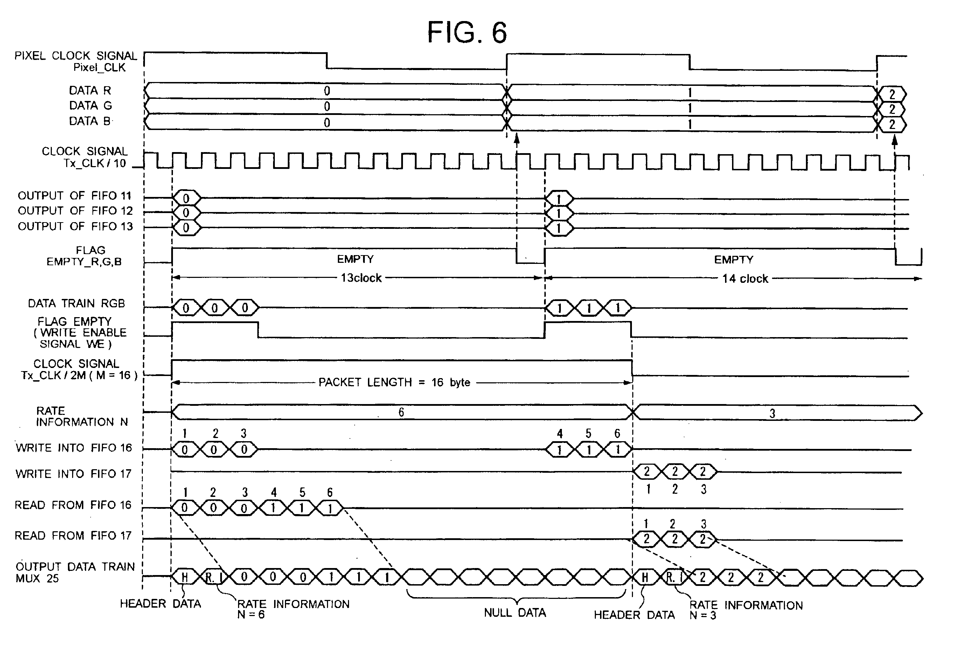

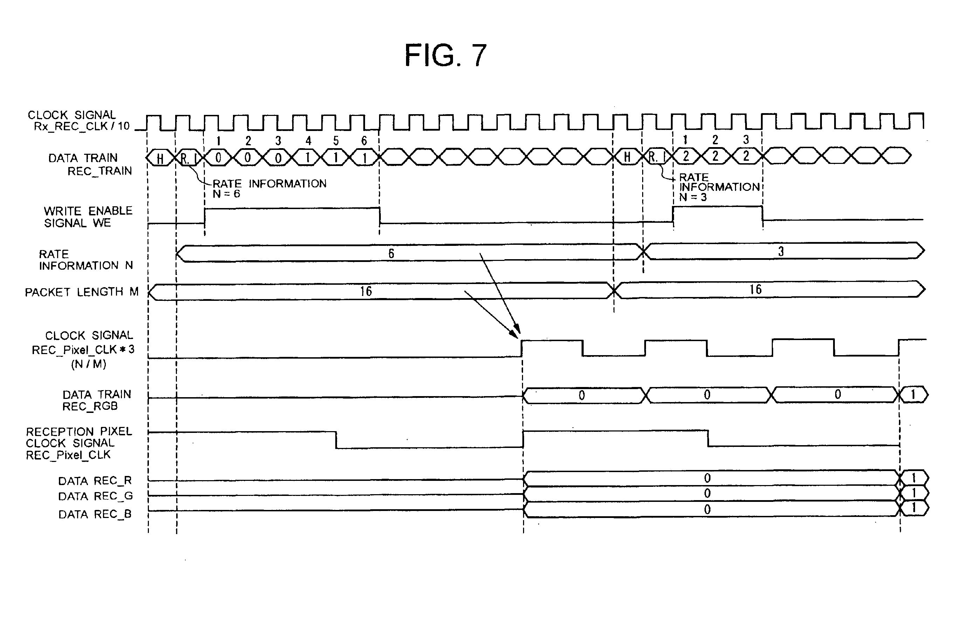

Fig. 6 shows signal waveforms and data contents in each section of the transmitter 1 when the frequency of the pixel clock signal Pixel_CLK is low, i.e., when the rate information N is low, and Fig. 7 shows signal waveforms and data contents in each section of the receiver 2 when the rate information N is low. Fig. 6 corresponds to the signal waveforms and data contents in each section of the transmitter 1 when the rate information N is high in Fig. 4, while Fig. 7 corresponds to the signal waveforms and data contents in each section of the receiver 2 when the rate information N is high in Fig. 5. A difference with the case where the rate information N is high lies in that there are six data pieces or three data pieces of data R, G, B in the three-color data train RGB in one packet data. Therefore, the rate information N transmitted by the packet data is equal to six or three. Also, the size of null data varies in accordance with the size of the three-color data train RGB in the packet data.

Even if the frequency of the pixel clock signal on the transmission side varies in accordance with digital RGB video signals to be transmitted, the rate information N is transmitted, so that the digital RGB video signals and pixel clock signal can be accurately reproduced on the reception side.

While the data train RGB in one packet has N bytes, the ratio of the pixel clock signal Pixel_CLK to the clock signal Tx_CLK/10 is not an integer ratio, so that the number of bytes of the data train RGB increases or decreases in units of ± one byte depending on packets, thereby absorbing a fraction less than the integer ratio. Also, as the number of bytes of the data train RGB varies, the number of bytes of the null data also varies corresponding thereto.

Also, while in the respective embodiments described above, RGB video signals are used as digital video signals representing three primary color, it is also possible to use a video signal of a color difference scheme comprised of a Y-component, a Pb-component, and a Pr-component. Further, such a video signal may be encrypted for use in the present invention.

As described above, according to the present invention, RGB video signals can be efficiently transmitted through a cable having a single line. Also, even if a pixel clock signal varies on the transmission side, the pixel clock signal can be accurately reproduced together with the video signal by following it on the reception side as well.

## Claims

1. A transmission system for transmitting digital video signals representing three primary colors, comprising:
transmission clock generating means for generating a transmission clock signal;
converting means for time-division-multiplexing the digital video signals in units of pixels in order to convert into a video data train;
rate information generating means for generating rate information based on the frequency of a reference clock signal of the digital video signals and the frequency of the transmission clock signal;
packet generating means for sequentially generating a packet for each predetermined period based on the period of the transmission clock signal, said packet including the video data train generated by said converting means within the predetermined period and the rate information;
transmitting means for sequentially transmitting the packet in synchronism with the transmission clock signal as a transmission signal;
a cable for conveying the transmission signal therethrough;
receiving means for receiving the transmission signal conveyed through said cable;
reception clock generating means for generating a reception clock signal in synchronism with each bit of the transmission signal received by said receiving means;
rate information detecting means for detecting the rate information from the packet in the transmission signal received by said receiving means;
clock signal reproducing means for generating a reproduction reference clock signal corresponding to the reference clock signal on the basis of the rate information detected by said rate information detecting means and the reception clock signal;
separating means for separating the video data train in the transmission signal received by said receiving means into data of each of three primary colors; and
outputting means for outputting the data of each of the three primary colors separated by said separating means in synchronism with the reproduction reference clock signal as the digital video signal.

2. A video signal transmission system according to claim 1, wherein:
said transmission clock generating means has frequency dividing means for generating a transmission side system clock signal by dividing the frequency of the transmission clock signal; and
said converting means includes a FIFO for reading the digital video signals in synchronism with the reference clock signal to hold the pixel data of three primary colors, and reading the held pixel data of three primary colors in synchronism with the transmission side system clock signal, and a multiplexer for converting the pixel data of three primary colors output from said FIFO to the video data train in synchronism with the transmission side system clock signal.

3. A video signal transmission system according to claim 1, wherein said rate information generating means generates the number of data pieces in units of pixels of the video data train included in the packet as the rate information.

4. A video signal transmission system according to claim 1, wherein said packet generating means places header data, the rate information, the video data train, and null data in the packet in that order.

5. A video signal transmission system according to claim 1, wherein:
said clock signal generating means includes:
packet length detecting means for detecting the length of the packet every time the header data is detected from the packet in the transmission signal received by said receiving means;
first frequency dividing means for dividing the frequency of the reception clock signal at a division ratio which is the ratio of rate information detected by said rate information detecting means to the packet length detected by said packet length detecting means; and
second frequency dividing means for dividing the frequency of an output clock signal of said first frequency dividing means by three to generate the reproduction reference clock signal.

6. A transmitter for transmitting digital video signals representing three primary colors, comprising:
transmission clock generating means for generating a transmission clock signal;
converting means for time-division-multiplexing the digital video signals in units of pixels in order to convert into a video data train;
rate information generating means for generating rate information based on the frequency of a reference clock signal of the digital video signals and the frequency of the transmission clock signal;
packet generating means for sequentially generating a packet for each predetermined period based on the period of the transmission clock signal, said packet including the video data train generated by said converting means within the predetermined period and the rate information; and
transmitting means for sequentially transmitting the packet in synchronism with the transmission clock signal as a transmission signal.

7. A receiver for receiving a transmission signal to reproduce digital video signals representing three primary colors, comprising:
receiving means for receiving the transmission signal;
reception clock generating means for generating a reception clock signal in synchronism with each bit of the transmission signal received by said receiving means;
rate information detecting means for detecting rate information from the packet in the transmission signal received by said receiving means;
clock signal reproducing means for generating a reproduction reference clock signal on the basis of the rate information detected by said rate information detecting means and the reception clock signal;
separating means for separating the video data train in the transmission signal received by said receiving means into data of each of three primary colors; and
outputting means for outputting the data of each of the three primary colors separated by said separating means in synchronism with the reproduction reference clock signal as the digital video signal.

8. A video signal transmission method for transmitting digital video signals representing three primary colors, comprising:
on a transmission side:
generating a transmission clock signal;
time-division-multiplexing the digital video signals in units of pixels in order to convert into a video data train;
generating rate information based on the frequency of a reference clock signal of the digital video signal and the frequency of the transmission clock signal;
generating a packet for each predetermined period based on the period of the transmission clock signal, said packet including the video data train generated within the predetermined period, and the rate information; and
sequentially transmitting the packet in synchronism with the transmission clock signal onto a cable as a transmission signal; and
on a reception side:
receiving the transmission signal conveyed through said cable;
generating a reception clock signal in synchronism with each bit of the received transmission signal;
detecting the rate information from the packet in the received transmission signal;
generating a reproduction reference clock signal corresponding to the reference clock signal on the basis of the detected rate information and the reception clock signal;
separating the video data train in the received transmission signal into data of each of three primary colors; and
outputting the data of each of the separated three primary colors in synchronism with the reproduction reference clock signal as the digital video signal.
